# EUROPEAN PATENT APPLICATION

(11) **EP 0 930 526 A1**
(43) Date of publication of application: **21.07.1999**
(21) Application number: 98933954.4
(22) Date of filing: 28.07.1998
(51) Int. Cl.: G03B 21/62, G03B 21/60

(54) **SCREEN CONTAINING SYNTHETIC MICA**

(30) Priority: 28.07.1997 JP 21809997; 28.07.1997 JP 21810097
(71) Applicant: SHISEIDO COMPANY LIMITED, Chuo-ku, Tokyo 104-8010 (JP)
(72) Inventor: MIYAMOTO, Tsuyoshi, Shiseido Research Center(1), Yokohama-shi, Kanagawa 223-8553 (JP); KIMURA, Asa, Shiseido Research Center(1), Yokohama-shi, Kanagawa 223-8553 (JP)
(74) Representative: Henkel, Feiler, Hänzel
(86) International application number: JP9803347
(87) International publication number: WO9905568

(57) **Abstract**

An object of the present invention is to provide a screen that improves luminance of image, is excellent in reproducibility of color and has visibility in wide range by improving mica and titanium oxide coated mica that are used in pearl agent for advancement in reflectivity and diffusibility of the image projected on the screen.

In order to achieve the above-mentioned objects, a screen containing synthetic mica in accordance with the present invention is the screen that indicates a projected image, wherein said screen contains a titanium oxide coated mica and said mica is a synthetic mica.

## Description

### RELATED APPLICATIONS

This application claims the priority of Japanese Patent Application Nos. 9-218099 and 9-218100 filed on July 28, 1997, which are incorporated herein by reference.

### FIELD OF THE INVENTION

The present invention relates to a screen that indicates a image and in particular, to an improvement of a mica powder used for progress of luminance of the image that is projected on a screen.

### BACKGROUND OF THE INVENTION

Generally, in a projection type display unit and the like, even when the distance between the unit and screen is short, sufficient projection distance can be secured by bending the projection light thrown from the projection display unit with the use of mirror and the like. Consequently, it is relatively easy to make the whole unit compact and the unit also have advantage that bright image can be watched. Further, the unit can readily indicate with large picture and the influence of radiation and the like is small. Therefore, demand for such apparatus will be increasingly expected hereinafter. Such display units project an image on a screen. As the screen, a reflective screen that an image is projected from observation side of the screen and a reflected image is observed, and a transmissive screen that an image is projected from backside of the screen and a transmitted image is observed, are existed.

Among these, the transmissive screen of rear projection type is composed of two pieces of lens that are a Fresnel lens and a lenticular lens, as disclosed in Japanese Unexamined Patent Publication Nos. 62-178227 and 5-88264. The Fresnel lens collects the projection light projected from backside and the lenticular lens widely distributes the light to horizontal direction. A bright image could be observed at front position due to the function of these two pieces of lens.

Since the surfaces of both Fresnel and lenticular lenses are uneven, useful effect can be obtained due to this unevenness. On the other hand, in the case where an image is projected onto a screen, there is a problem that a picture becomes extremely unclear to see because bars are appeared in piles owing to unevenness of lens.

The reflective screen comprises a light reflecting surface and light diffusion layer on a base material. The mainstream in the recent technological development of screen is to improve the reflecting luminance to the quantity of light to be projected and improvement for visualizing bright image at wide angle. In the light reflecting surface and light diffusion layer, a pearl agent which uses the powder coated titanium dioxide on the surface of mica, a screen covered with glass beads on the surface of the screen, a screen arranged unevenness on the surface of the screen and the like are existed. Although the properties of the screen are improved remarkably, nevertheless there still remains room for improvement in reflection luminance and angle of distinct vision.

In particular, to intend multiple reflection of light by using the pearl agent which uses the powder coated titanium dioxide on the surface of mica so as to improve reflection luminance of the screen, is the known technology used widely as disclosed in Japanese Unexamined Patent Publication Nos. 3-209447, 3-249634, 4-139437 and 4-179943.

In fact, however, the color of the projected image becomes dark and the image is not clear and reflection luminance is not so much high. Also, it is not necessarily to bring the expected effect in reproducibility of the projected image color and reflection luminance These are due to the property of titanium dioxide coated mica, it has been considered as the limit of the property of titanium dioxide coated mica.

### SUMMARY OF THE INVENTION

The present invention has been achieved in view of the foregoing problems of the prior art. An object of the present invention is to provide a screen that improves luminance of image, is excellent in reproducibility of color and has visibility in wide range by improving mica and titanium dioxide coated mica that are used in pearl agent for progress in reflectivity and diffusibility of the image that is projected on the screen.

In order to achieve the foregoing objects, a screen containing synthetic mica in accordance with the present invention is a screen that indicates a projected image, wherein the screen contains a titanium oxide coated mica and the mica is a synthetic mica.

Also, in said screen in accordance with the present invention, a reflective screen that a light reflecting surface and a light diffusion layer are formed on a base material, is preferable.

Also, in said screen in accordance with the present invention, a transmissive screen that a light diffusion layer is formed on a base material, is preferable.

Also, in said screen in accordance with the present invention, it is preferable that the synthetic mica in a titanium oxide coated synthetic mica to be contained is a synthetic fluorphlogophite shown by the Formula:

X_{1/3∼1}Y_{2∼3}(Z₄O₁₀)F₂

wherein X represents one or more ion selected from the group consisting of Na⁺, K⁺, Li⁺, Ca²⁺, Rb²⁺ and Sr²⁺; Y represents one or more ion selected from the group consisting of Mg²⁺, Fe²⁺, Ni²⁺, Mn²⁺, Al³⁺, Fe³⁺ and Li⁺; and Z represents one or more ion selected from the group consisting of Al³⁺, Si⁴⁺, Ge⁴⁺, Fe³⁺ and B³⁺.

Also, in a projection type reflective screen in accordance with the present invention, it is preferable that the synthetic mica that is used in the titanium oxide coated synthetic mica to be contained has a particle diameter of 5 to 200 µm.

Also, in a transmissive screen in accordance with the present invention, it is preferable that the synthetic mica that is used in the titanium oxide coated synthetic mica to be contained has a particle diameter of 60 to 200 µm.

Also, in said screen in accordance with the present invention, it is preferable that the titanium oxide coated synthetic mica to be contained is coated the titanium oxide having layer thickness of 20 to 40nm on the synthetic mica

Also, in said screen in accordance with the present invention, it is preferable that the titanium oxide coated mica to be contained is that a titanium dioxide and/or a low order titanium oxide on the synthetic mica.

Also, in said screen in accordance with the present invention, it is preferable that the titanium oxide coated synthetic mica is used as a main ingredient that is composed of a pearl agent and said titanium oxide coated mica is contained in the screen by applying said pearl agent.

### BRIEF DESCRIPTION OF THE DRAWINGS

Fig. 1 shows a conceptual drawing of a reflective screen and a projection type display unit in accordance with an embodiment of the present invention.
Fig. 2 shows a conceptual drawing of the construction of a reflective screen in accordance with an embodiment of the present invention.
Fig. 3 shows an explanatory drawing of the action of incident light in the thin film that is made of pearl agent on the reflective screen.
Fig. 4 shows an explanatory drawing of the action of incident light in the thin film that is made of aluminum powder in the place of pearl agent on the reflective screen.
Fig. 5 shows a conceptual drawing of a transmissive screen and a rear projection type display unit in accordance with an embodiment of the present invention.
Fig. 6 shows a conceptual drawing of the construction of a transmissive screen in accordance with an embodiment of the present invention.
Fig. 7 shows an explanatory drawing of the action of incident light in the thin film that is made of pearl agent on the transmissive screen.
Fig. 8 shows an explanatory drawing of the action of incident light in the thin film that is made of aluminum powder in the place of pearl agent on the transmissive screen.

### BEST MODE FOR CARRYING OUT THE INVENTION

The present invention is to improve the properties such as luminance, reproducibility of color or angle of distinct vision of the image of the screen that indicates the image projected from a projector in observation.

As such kind of screen, a reflective screen and a transmissive screen are mainly existed as mentioned in background's section. Either form can be adopted in the present invention.

In the following, the preferred embodiments of the present invention will be explained separately according to several forms.

### REFLECTIVE SCREEN

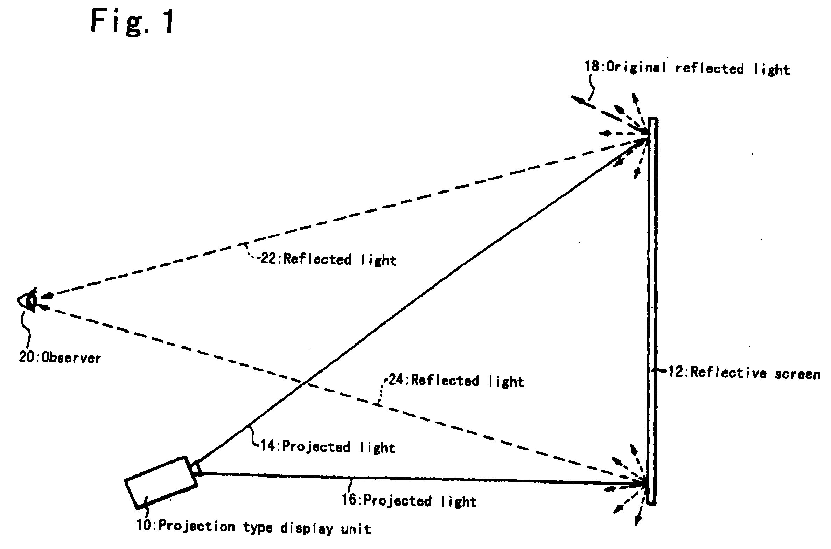

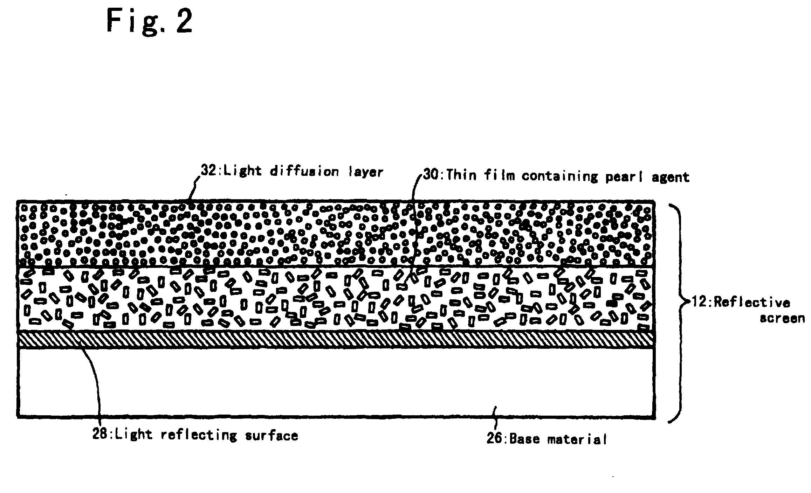

A conceptual drawing of a reflective screen and a projection type display unit in accordance with an embodiment of the present invention is shown in Fig. 1. A conceptual drawing of the constitution of a reflective screen in accordance with an embodiment of the present invention is shown in Fig. 2.

The light projected from a projection type display unit 10 of Fig. 1 is projected on a reflective screen 12 with a certain angle so as to throw on a large scale. In Fig. 1, the light projected on the upper end and the light projected on the bottom end will be referred to as a projected light 14 and a projected light 16, respectively. The projected light 14 gets to the screen and being reflected thereon. The light reflects with the angle of reflection equivalent to the angle of incidence in the similar manner to an original reflected light 18 and does not reach to an observer 20, in the case where only specular reflection is performed on the screen. Namely, the reflected light is invisible to the observer. Therefore, it is necessary to reflect the projected light to the direction of the observer in order that the projected light that is projected by the projection type display unit can be reflected to the observer as an image. Also, when a great many people exists as the observer, the projected light must be reflected to a wide direction in order that a lot of people can observe the image. Consequently, the projected light 14 gets to the screen and is reflected and diffused in wide angle shown as an arrow of dotted line. The observer 20 observes a part of the diffused reflection light as like a reflected light 22. This action applies to the bottom end's case. The projected light 16 gets to the screen and being reflected and diffused in wide angle as shown with an arrow of dotted line. The observer 20 observes a part of the diffused reflection light as like a reflected light 24. In this way, the projected light that is projected from the projection type display unit can throw an image to the observer by the similar actions of reflection and diffusion in the whole portions of the screen that the projected light was projected.

The reflective screen 12 shown in Fig. 1 comprises a flat base material 26 and a light reflecting surface 28, a thin film containing pearl agent 30 which uses synthetic mica and a light diffusion layer 32 that are formed thereon as shown in Fig. 2. A projected light gets to the light reflecting surface by transmitting the light diffusion layer 32 and the thin film containing pearl agent 30. A part of the projected light transmits therethrough by reflecting and diffusing on the surfaces of titanium oxide or synthetic mica of the pearl agent. Then, the projected light is totally reflected and the reflected light transmits again the thin film containing pearl agent. A part of the reflected tight transmits the thin film by reflecting and diffusing on the surfaces of titanium dioxide or synthetic mica of the pearl agent. The light diffused multidirectionally with titanium dioxide coated synthetic mica is diffused far more multidirectionally by the light diffusion layer that emboss-processing or the like was performed. In this way, the screen can reflects the projected light with a bright image at wide angle.

By the way, to manufacture a reflective screen that luminance of image is high and which have wide angle of bright field should be done by two antithetical processes. Namely, it is better to inhibit diffusion of the projected light and to stop the light within a specific range in order to possess high luminance of image in the screen. As the image reflected on the screen, however, it is requires the image that can reflects a bright image at wide angle so as that a great many people can observe. Accordingly, it is necessary to diffuse the projected light as much as possible in order that the screen can possess a wide angle of bright field.

It is not too much to say that the screen, which can possess these two antithetical properties at the same time, is the excellent screen. Therefore, in order to possess these two antithetical properties, there are problems how to reflect and diffuse or transmit and diffuse the projected light in effective and how to lower the loss of the light in the process.

The characteristic of the present invention is that luminance of the image in the screen is high and is to reflect a clear image, i.e., is to observe a clear and bright projected picture. In this embodiment, for the purpose of this, synthetic mica that is containing of colorable metals is too much less and whose chroma is favorable is used in pearl agents to be used.

Namely, it is a pearl agent that uses synthetic mica powder, which can lower loss of light in the processes of reflection and diffusion of the light.

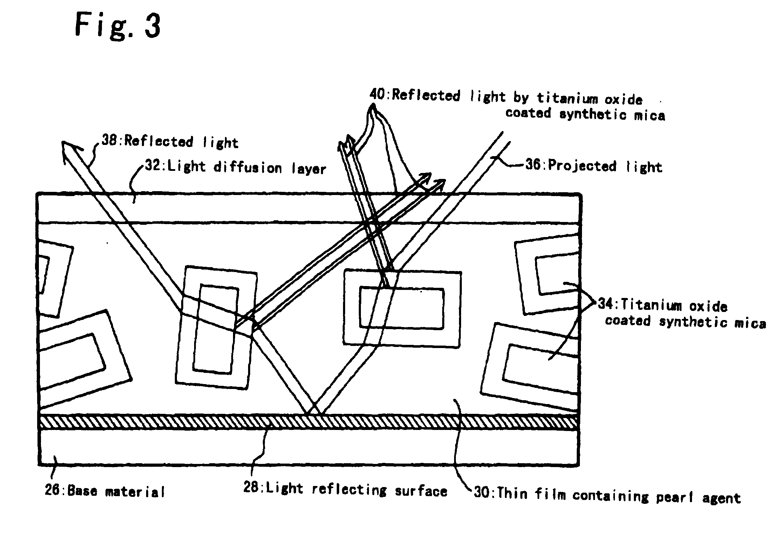

Fig. 3 is an explanatory drawing of the action of incident light in the thin film based on the pearl agent that is set on the reflective screen of the present invention that is shown in Figs. 1 and 2.

As shown in Fig. 3, a titanium dioxide coated synthetic mica 34 faces arbitrary direction in a thin film containing pearl agent 30. A projected light 36 is reflected on the surfaces of titanium oxide or synthetic mica powder, or is refracted in the process of transmitting through titanium oxide or synthetic mica powder. Thereby, an image can be observed at wide angle face to the front of the screen. In this case, diffusion of light is mainly due to refraction in the process of transmitting through titanium oxide and synthetic mica powder.

In here, when the titanium oxide coated mica uses natural mica in the place of synthetic mica in Fig. 3, coloring may be occurred because natural mica contains very small amount of metal. It results in bad influence, i.e., light is weaken, a color of the projected light is changed by influence of coloring and the like, at the time when the projected light transmits titanium oxide coated natural mice Further, the projected light through natural mica does not always transmit only one time. The projected light will transmits natural mica twice or three times, when the possibility that the projected light transmits again natural mica after reflecting the light reflecting surface or the projected light transmits the other titanium oxide coated natural mica that is not the one that the projected light transmits once, is considered. Therefore, bad influence damaged to the light of natural mica comes to have a significant meaning notwithstanding the coloring is very slight.

Further, it will be considered the case where using aluminum powder for reflection and diffusion in the place of diffusion that is mainly occurred by refracting with pearl agent of the present invention.

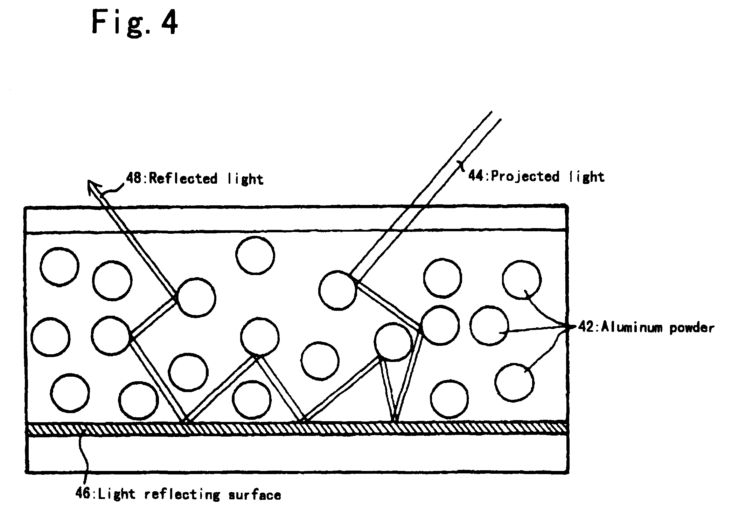

An aluminum powder 42 exists in an arbitrary place in the thin film as shown in Fig. 4. Because the light can never transmits the aluminum powder, a projected fight 44 reflects on the surface of aluminum powder. Reflection of the projected light is repeated on the surfaces of the aluminum powder and a light reflecting surface 46 in the manner that the light reflects on the surface of the other aluminum powder. This irregular reflection is repeated until the light gets out of the surface of the screen again.

However, thus repeated irregular reflections make an optical path length far longer than diffusion by refraction with the use of the pearl agent. This becomes the cause for reducing the strength of the reflected light. As a result, reflecting efficiency is deteriorated.

On the contrary, in the present invention, by using synthetic mica that is containing extremely lower amount of metal and is favorable in chroma, there is absolutely no possibility to absorb, weak or color the light at the time when the light transmits the screen. Though the titanium oxide coated synthetic mica reflects the projected light on the surfaces of titanium oxide and synthetic mica, nevertheless light transmittance of the titanium oxide coded mica is high and there is very few in its quantity of reflection. Also, because diffusion is almost occurred by refraction in the diffusing process of the projected light of the titanium oxide coated synthetic mica, it is possible to inhibit loss of light to the minimum. Moreover, synthetic mica has an effect to further widen a diffusion direction by reflecting the projected light on the surfaces of titanium oxide and synthetic mica.

In this manner, the characteristic of the present invention is to realize the reflective screen that can improves luminance of image in the screen and can projects a clear image on a screen at wide angle by inhibiting loss of light to the minimum with the use of synthetic mica that is containing extremely lower amount of metal and is favorable in chroma

Next, an example of synthetic mica used in the present invention will be shown in the following Formula.

X_{1/3∼1}Y_{2/3}(Z₄O₁₀)F₂

wherein X represents one or more ion selected from the group consisting of Na⁺, K⁺, Li⁺, Ca²⁺, Rb²⁺ and Sr²⁺; Y represents one or more ion selected from the group consisting of Mg²⁺, Fe²⁺, Ni²⁺, Mn²⁺, Al³⁺, Fe³⁺ and Li⁺; and Z represents one or more ion selected from the group consisting of Al³⁺, Si⁴⁺, Ge⁴⁺, Fe³⁺ and B³⁺.

A general manufacturing process of synthetic mica powder, e.g., in case of synthetic fluorphlogophite, is shown in the following. Approximately 40 parts of silicic anhydride, approximately 30 parts of magnesium oxide, approximately 13 parts of aluminum oxide and approximately 17 parts of potassium silicofluoride were mixed. The mixture was dissolved at 1400 to 1500°C and was crystallized at 1300 to 1400°C, thereby obtaining synthetic fluorphlogophite (KMg(AlSi₃O₁₀)F₂). A mass of the resulting synthetic fluorphlogophite was pulverized and classified, thereby obtaining synthetic fluorphlogophite powder. A shape of thus resulting synthetic fluorphlogophite is indefinite plate-shaped. Though a particle diameter depends on its usage, generally, a particle diameter of thickness direction is 0.05 to 10 µm and face direction is 2 to 200 µm.

Manufacturing examples of the reflective screen in accordance with the present invention and the result of comparative experiments of its properties will be described in the following.

A reflective screen and a projection type display unit in accordance with an embodiment of the present invention is composed by setting the light reflecting surface on the base material and by laminating the pearl agent used synthetic mica of the present invention and the light diffusion layer thereon, successively.

As a base material, white plastic sheet, polyolefins such as polyvinyl chloride, polyethylene or polypropylene, polyesters such as polyethylene terephthalate, polystyrenes, polycarbonates, acrylic resins or polyurethane resins can be used. 20 to 100 wt% of a plasticizer may be added to resins as occasion demands. It is preferable that thickness of the base material is 10 to 1000 µm.

As a light reflecting surface, aluminum foil, aluminum plate, aluminum evaporation film or aluminum powder can be used. A thin film is formed with the pearl agent used synthetic mica of the present invention thereon.

As a light diffusion layer, plastic film, polypropylene, vinyl chloride, polyethylene terephthalate or triacetyl cellulose film can be used. It is preferable to use the film processed with emboss finish or mat finish.

As light reflecting surface, thin film of pearl agent and light diffusion layer, printing methods such as screen printing, roll coating or offset printing ad coating methods such as knife coater or comma coater can be exemplified.

A preferred example of the present invention will be explained in the following.

### Example 1-1

40 Parts of silicic anhydride, 30 parts of magnesium oxide, 13 parts of aluminum oxide and 17 parts of potassium silicofluoride were mixed. The mixture was dissolved at 1500°C and was crystallized at 1350°C, thereby obtaining synthetic fluorphlogophite. The resulting synthetic fluorphlogophite was clashed coarsely and pulverized, thereby obtaining 100 parts of synthetic fluorphlogophite whose particle diameter was 20 to 100 µm (circular conversion value measured with CEDIGRAPH 5000-01 manufactured by Micromelitech Inc.: measuring method of particle diameter will be the same as this in the following). Further, 50 parts of the resulting synthetic mica was added to 500 parts of ion-exchange water. The mixture was stirred sufficiently and dispersed in uniform. 208.5 parts of 40 wt% titanyl sulfate solution was added to the resulting dispersion and the mixture was heated and boiled for 6 hours while being stirred. After being left the mixture cooling, the mixture was filtered and washed with water. Then it was calcined at 900°C, thereby obtaining 90 parts of synthetic mica coated with titanium dioxide. A pearl agent used thus obtained synthetic mica powder was added to an acrylic resin lacquer and a pearl agent ink was obtained by dispersing and mixing it with a homogenizer. A polyvinylchloride sheet whose thickness was 200 µm was used as a base material. A metal aluminum foil 600 mm, square was stuck on the polyvinyl sheet. The pearl agent ink used synthetic mica of the present invention was printed thereon with silk screen so as that thickness of the ink could be 100 µm. Then, polysiloxane resin was printed thereon with silk screen so as that thickness of polysiloxane resin could be 100 µm, thereby obtaining a projection type reflective screen (referred to as Invention 1 in the following). In here, an application quantity of the pearl agent per unit area was approximately 20mg/cm².

### Manufacturing of Comparative Example 1-1

A screen (referred to as Comparative Example 1 in the following) produced according to the same procedure as the example of the present invention, was manufactured except for using natural mica in the place of the pearl agent of the present invention. Comparative experiment was performed between the properties of Comparative Example 1 and the reflective screen of the present invention.

### Manufacturing of Comparative Example 1-2

A screen (referred to as Comparative Example 2 in the following) produced according to the same procedure as the example of the present invention, was manufactured except for using aluminum powder in the place of the pearl agent of the present invention. Comparative experiment was performed between the properties of Comparative Example 2 and the reflective screen of the present invention.

### Experimental Result

As the comparative experiment for the properties of the screen, the present inventors investigated and judged with respect to three values: i.e., screen gauge value (referred to as SG value in the following) shown π times value of the percentage of the reflected luminance in front of the screen with respect to the incident illumination of the screen; the value of angle that the reflected luminance in front of the screen becomes half value (referred to as half-value angle in the following); and reproducibility to the color of the image to be projected (referred to as reproducibility in the following).

The result shown in TABLE 1 was obtained by performing comparative experiment in the manner as mentioned above. In evaluating the properties of the screen, SG value and half-value angle were expressed numerically according to the actual measurement. These values indicated an excellent property, as these values were getting large. In reproducibility, the color of the image projected on the screen and the color in the actual film were compared. Reproducibility was evaluated with classification into five grades, i.e., Very Good ⓞ; Good ○ ; Average △; Bad X; and Too Bad X X.

**TABLE 1**

| Comparing Items | SG Value | Half-Value Angle | Reproducibility |
|---|---|---|---|
| Invention | 5.0 | ±35° | ⓞ |
| Comp. Ex. 1 | 4.0 | ±30° | ○ |
| Comp. Ex. 2 | 4.0 | ±10° | ○ |

As shown in TABLE 1, Comparative Example 1 was unfavorable with regard to reproducibility, while it represented favorable results to a certain degree in respect of SG value and half-value angle. Also, though Comparative Example 2 represented favorable results to a certain degree in respect of SG value and reproducibility, nevertheless it could not obtain satisfactory result with regard to half-value angle. On the contrary, the properties of the reflective screen with aid of the pearl agent used synthetic mica powder of the present invention represented favorable results in respect of the whole items to be experimented.

Next, experiment of influence for the properties of the screen was performed by using the pearl agent that titanium dioxide having a settled layer thickness was coated and that used synthetic mica powders having distinct particle diameter. In this experiment, the layer thickness of titanium dioxide was uniformly determined on 40nm. As a result, the result in a manner as TABLE 2 was obtained. Representations of evaluation were the same as in TABLE 1.

**TABLE 2**

| Particle Diameter | 2 | 5 | 20 | 60 | 80 | 100 | 200 |
|---|---|---|---|---|---|---|---|
| SG Value | 3.0 | 4.4 | 4.5 | 4.6 | 4.8 | 5.0 | 4.8 |
| Half-Value Angle | ±15° | ±30° | ±30° | ±30° | ±35° | ±35° | ±35° |
| Reproducibility | ○ | ○ | ○ | ⓞ | ⓞ | ⓞ | ⓞ |

In TABLE 2, a unit of particle diameter was µm.

From the result of TABLE 2, it was appreciated that particle diameter of synthetic mica powder used in the present invention was preferably 5 µm to about 200 µm. As a result of this, though there was the data that natural mica having particle diameter of 5 to 60 µm represented favorable result, nevertheless synthetic mica of the present invention that had larger particle diameter than natural mica and that was containing extremely lower amount of colorable metals, represented favorable result.

Further, there was the data of the interference color represneted by titanium dioxide coated mica according to the layer thickness of titanium dioxide to be coated on the surface of synthetic mica.

| Interference Colors | Geometrical Thickness of Titanium Dioxide (nm) |
|---|---|
| Silver | 20∼40 |
| Pale Gold | 40∼90 |
| Gold | 40∼90 |
| Red | 90∼110 |
| Violet | 110∼120 |
| Blue | 120∼135 |
| Green | 135∼155 |
| Gold (Second Order) | 155∼175 |
| Violet (Second Order) | 175∼200 |

Then, experiment for the properties of the screen used titanium dioxide coated synthetic mica powder was performed with regard to distinct layer thickness of titanium dioxide. The results shown in TABLES 3 and 4 were obtained. In this experiment, particle diameter of synthetic mica was uniformly determined on 60 µm. Representations of evaluation were the same as shown in TABLES 1 and 2.

**TABLE 3**

| Layer Thickness | 5 | 10 | 20 | 30 | 40 |
|---|---|---|---|---|---|
| SG Value | 3.0 | 4.0 | 4.8 | 5.0 | 5.0 |
| Half-Value Angle | ±15° | ±20° | ±35° | ±35° | ±35° |
| Reproducibility | ○ | ○ | ⓞ | ⓞ | ⓞ |

**TABLE 4**

| Layer Thickness | 50 | 80 | 100 | 150 | 200 |
|---|---|---|---|---|---|
| SG Value | 5.0 | 4.9 | 4.8 | 4.5 | 4.5 |
| Half-Value Angle | ±30° | ±25° | ±20° | ±20° | ±20° |
| Reproducibility | ○ | △ | △ | △ | X |

In TABLES 3 and 4, a unit of layer thickness was nm.

From the results of TABLES 3 and 4, it was preferable that layer thickness of titanium dioxide to be coated on the surface of synthetic mica in the present invention was 20nm to about 40nm.

As mentioned thereinbefore, properties of the screen are highly improved by using synthetic mica in accordance with the present invention that is containing extremely lower amount of colorable metal and is favorable in chroma. In particular, the effect can be displayed exceedingly in the case where particle diameter is 5 µm to 200 µm and layer thickness is 20nm to 40nm.

As explained thereinbefore, according to the reflective screen and the projection type display unit in accordance with the present invention, it is possible to provide a reflective screen and a projection type display unit that is improved in reflected luminance of screen and a clear image can be observed at wide angle by using synthetic mica that is containing extremely lower amount of colorable metal and is favorable in chroma as mica and titanium dioxide coated mica to be used in the pearl agent.

### TRANSMISSIVE SCREEN

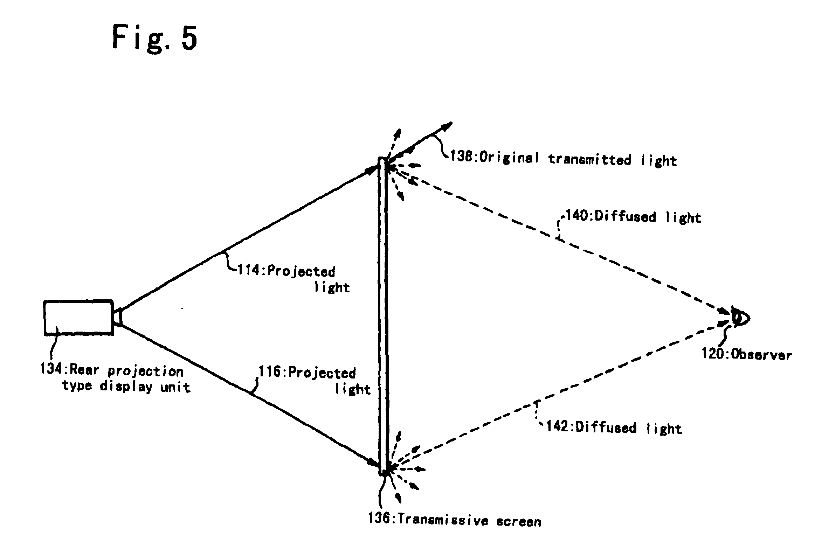

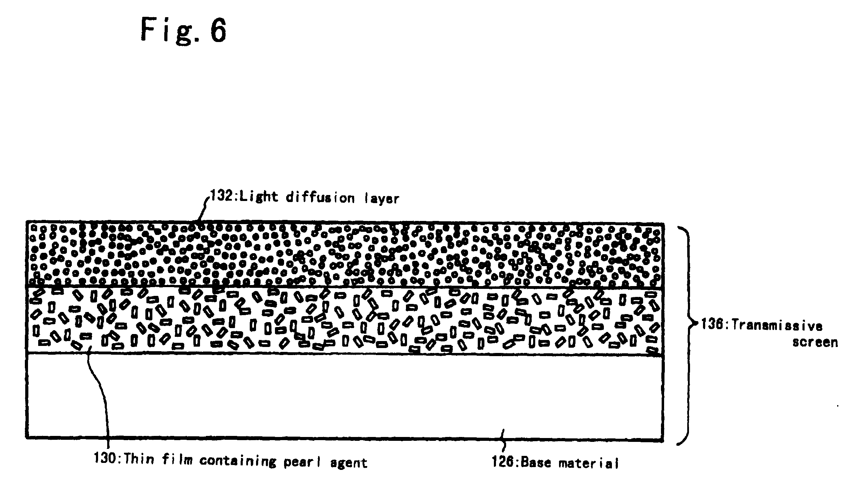

A conceptual drawing of a transmissive screen and a rear projection type display unit in accordance with an embodiment of the present invention is shown in Fig. 5. A conceptual drawing of the constitution of a transmissive screen in accordance with an embodiment of the present invention is shown in Fig. 6.

The light projected from a rear projection type display unit 134 of Fig. 5 is projected on a transmissive screen 136 with a certain angle so as to throw on a large scale. In Fig. 5, the light projected on the upper end and the light projected on the bottom end will be referred to as a projected light 114 and a projected light 116, respectively. The projected light 114 gets to the screen and transmits therethrough. The transmitted light transmits therethrough according to the incident direction in the similar manner to an original transmitted light 138 and does not reach to an observer 120, in the case where only the projected light transmits the screen. Therefore, it is necessary to diffuse the projected light to the direction of the observer so as that the projected light that is projected by the rear projection type display unit can be reflected to the observer as an image. Also, when a great many people exists as the observer, the projected light must be diffused to a wide direction in order that a lot of people can observe the image. Consequently, the projected light 114 gets to the screen and is diffused in wide angle shown as an arrow of dotted line. The observer observes a part of the diffused light as like a diffused light 140. This action applies to the bottom end's case. The projected light 116 gets to the screen and is diffused in wide angle as shown with an arrow of dotted line. The observer 120 observes a part of the diffused light as like a diffused light 142. In this way, the projected light that is projected from the rear projection type display unit can throw an image to the observer by the similar actions of transmission and diffusion in the whole portion of the screen that the projected light is projected.

The transmissive screen 136 shown in Fig. 5 comprises a flat base material 126 and a thin film containing pearl agent 130 used synthetic mica and a light diffusion layer 132 that are formed thereon as shown in Fig. 6. A projected light transmits the base material of the screen, wherein a part of the projected light transmits the thin film containing pearl agent with reflecting and diffusing on the surfaces of titanium dioxide or synthetic mica of pearl agent. The light diffused multidirectionally with titanium dioxide coated synthetic mica is diffused far more multidirectionally by the light diffusion layer that emboss-processing or the like was performed. In this way, the screen can reflects the projected light with a bright image at wide angle.

Incidentally, as mentioned in the reflective screen, it is similar for the transmissive screen that a screen having high luminance of image and wide angle of bright field can possess two antithetical properties at the same time. Therefore, in order to possess these two antithetical properties, there are problems how to reflect and diffuse or transmit and diffuse the projected light in effective and how to lower the loss of the light in the process.

The characteristic of the present invention is that luminance of the image in the screen is high and is to reflect a clear image, i.e., is to observe a clear and bright projected picture. In this embodiment, for the purpose of this, synthetic mica that is containing extremely lower amount of colorable metal and whose chroma is favorable is used for the pearl agents to be used.

Namely, it is a pearl agent that uses synthetic mica powder, which can lower the loss of the light in the processes of reflection and diffusion of light.

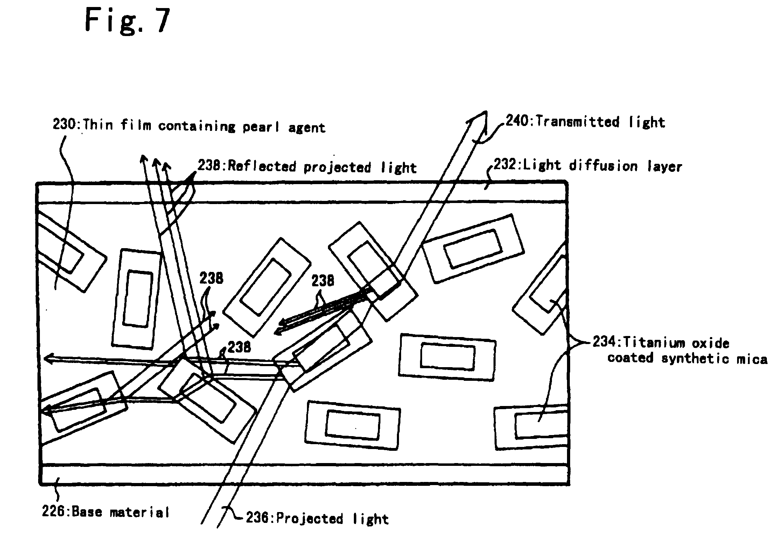

Fig. 7 is a explanatory drawing of action of incident light in the thin film based on the pearl agent that is set on the transmissive screen of the present invention shown in Figs. 5 and 6.

As shown in Fig. 7, a titanium dioxide coated synthetic mica 234 faces arbitrary direction in a thin film containing pearl agent 230. A projected light 236 is reflected on the surfaces of titanium oxide or synthetic mica powder, or is refracted in the process of transmitting through titanium oxide or synthetic mica powder. Then, a reflected projected light 238 is reflected at the other titanium oxide coated synthetic mica or is refracted on the occasion of transmission. Thereby, an image can be observed at wide angle face to the front of the screen. In this case, though the titanium oxide coated synthetic mica reflects a part of the light at the surface thereof, it have high light transmittance. Accordingly, diffusion of light is mainly due to refraction in the process of transmitting through titanium oxide and synthetic mica powder.

In here, when the titanium oxide coated mica uses natural mica in the place of synthetic mica in Fig. 7, the problems as mentioned in the reflective screen are occurred. Namely, coloring may be occurred because natural mica contains very small amount of metal. It results in bad influence, i.e., light is weaken, a color of the projected tight is changed by the influence of coloring and the like, at the time when the projected light transmits titanium oxide coated natural mica. Further, the projected light through natural mica does not always transmit only one time. The projected tight will transmits natural mica twice or three times, when the possibility that the projected light transmits again natural mica after reflecting the light reflecting surface or the projected light transmits the other titanium oxide coated natural mica that is not the one that the projected light transmits once, is considered. Therefore, bad influence damaged to the light caused by natural mica comes to have a significant meaning notwithstanding the coloring is very slight.

Further, it will be considered the case where aluminum powder is used for diffusion of the transmissive screen.

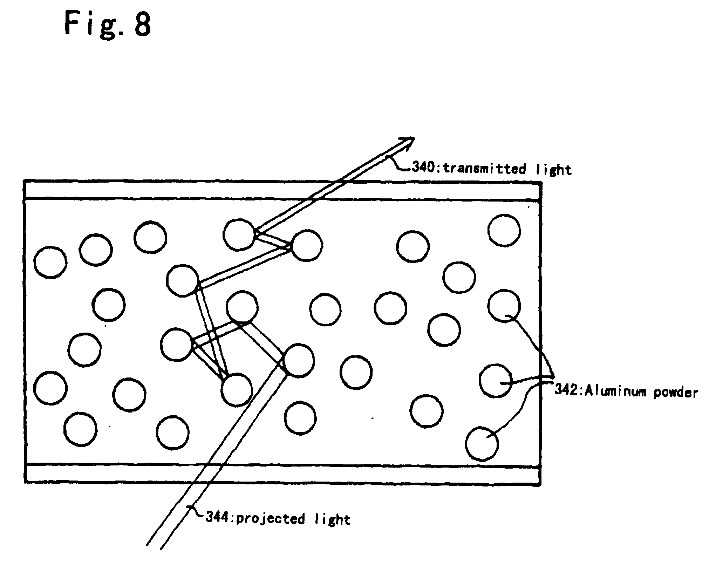

An aluminum powder 342 exists in a arbitrary place in the thin film as shown in Fig. 8 in the similar manner to Fig. 7. Because the light can never transmits the aluminum powder, a projected light 344 reflects on the surface of the aluminum powder. Reflection of the projected light is repeated on the surface of the aluminum powder in the manner that the light reflects on the surface of the other aluminum powder. This irregular reflection is repeated until the light gets out of the surface of the screen again. However, thus repeated irregular reflections make a optical path length far longer than diffusion by refraction with the use of pearl agent in the similar miner to the above-mentioned reflective screen. It cases the loss of projected light. As a result, transmitting efficiency is deteriorated. In addition to this, when diffusion is performed by reflection with aluminum powder, the projected light is frequently reflected to not the surface side but the base material side of the screen. As a result, an image in the surface side of the screen is darkened.

On the contrary, in the present invention, by using synthetic mica that does not contain metal and is favorable in chroma, there is absolutely no possibility to absorb, weak or color the light at the time when the light transmits the screen. Though the titanium oxide coated synthetic mica reflects the projected light on the surfaces of titanium oxide and synthetic mica, nevertheless light transmittance of the titanium oxide coated mica is high and there is very few in its quantity of reflection. Also, because diffusion is almost occurred by refraction in the diffusing process of the projected light of the titanium oxide coated synthetic mica, it is possible to inhibit loss of light to the minimum. Moreover, synthetic mica has an effect to further widen a diffusion direction by reflecting the projected light on the surfaces of titanium oxide and synthetic mica.

In this manner, the characteristic of the present invention is to realize the transmissive screen that can improves luminance of the image in the screen and can projects a clear image on the screen at wide angle by inhibiting loss of light to the minimum with the use of synthetic mica that does not contain metal and is favorable in chroma.

In here, synthetic mica used in the transmissive screen is the same as mentioned in the reflective screen. Formula of synthetic mica and manufacturing example thereof will be shown in the following.

X_{1/3∼1}Y_{2∼3}(Z₄O₁₀)F₂

wherein X represents one or more ion selected from the group consisting of Na⁺, K⁺, Li⁺, Ca²⁺, Rb²⁺ and Sr²⁺; Y represents one or more ion selected from the group consisting of Mg²⁺, Fe²⁺, Ni²⁺, Mn²⁺, Al³⁺, Fe³⁺ and Li⁺; and Z represents one or more ion selected from the group consisting of Al³⁺, Si⁴⁺, Ge⁴⁺, Fe³⁺ and B³⁺.

A general manufacturing process of synthetic mica powder, e.g., in case of synthetic fluorphlogophite, is shown in the following. Approximately 40 parts of silicic anhydride, approximately 30 parts of magnesium oxide, approximately 13 parts of aluminum oxide and approximately 17 parts of potassium silicofluoride were mixed. The mixture was dissolved at 1400 to 1500°C and was crystallized at 1300 to 1400°C, thereby obtaining synthetic fluorphlogophite (KMg(AlSi₃O₁₀)F₂). A mass of the resulting synthetic fluorphlogophite was pulverized and classified, thereby obtaining synthetic fluorphlogophite powder. A shape of thus resulting synthetic fluorphlogophite is indefinite plate-shaped. Though a particle diameter depends on its usage, generally, the particle diameter of thickness direction is 0.05 to 10 µm and face direction is 2 to 200 µm.

Manufacturing examples of the transmissive screen in accordance with the present invention and the result of comparative experiments of its properties will be described in the following.

A transmissive screen and a rear projection type display unit in accordance with an embodiment of the present invention is composed by laminating the pearl agent used synthetic mica of the present invention and the light diffusion layer successively on the base material.

As a base material, transparent plastic, glasses, polyolefins such as polyvinyl chloride, polyethylene or polypropylene, polyesters such as polyethylene terephthalate, polystyrenes, polycarbonates, acrylic resins or polyurethane resins can be used. 20 to 100 wt% of a plasticizer may be added to resins as occasion demands. It is preferable that thickness of the base material is 10 to 1000 µm.

A thin film is formed with the pearl agent used synthetic mica of the present invention on the base material and a light diffusion film is formed thereon.

As a light diffusion layer, plastic film, polypropylene, vinyl chloride, polyethylene terephthalate or triacetyl cellulose film can be used. It is preferable to use the film processed with emboss finish or mat finish.

As thin film of pearl agent and light diffusion layer, printing methods such as screen printing, roll coating or offset printing and coating methods such as knife coater or comma coater can be exemplified.

A preferred example of the present invention will be explained in the following.

### Example 2-1

40 Parts of silicic anhydride, 30 parts of magnesium oxide, 13 parts of aluminum oxide and 17 parts of potassium silicofluoride were mixed. The mixture was dissolved at 1500°C and was crystallized at 1350°C, thereby obtaining synthetic fluorphlogophite. The resulting synthetic fluorphlogophite was clashed coarsely and pulverized, thereby obtaining 100 parts of synthetic fluorphlogophite whose particle diameter was 20 to 100 µm (circular conversion value measured with CEDIGRAPH 5000-01 manufactured by Micromelitech Inc.: measuring method of particle diameter will be the same with this in the following). Further, 50 parts of the resulting synthetic mica was added to 500 parts of ion-exchange water. The mixture was stirred sufficiently and dispersed in uniform. 208.5 parts of 40 wt% titanyl sulfate solution was added to the resulting dispersion and the mixture was heated and boiled for 6 hours while being stirred. After being left the mixture cooling, the mixture was filtered and washed with water. Then it was calcined at 900°C, thereby obtaining 90 parts of synthetic·mica coated with titanium dioxide. A pearl agent used thus obtained synthetic mica powder was added to an acrylic resin lacquer and a pearl agent ink was obtained by dispersing and mixing it with a homogenizer. A transparent plastic whose thickness was 200 µm was used as a base material. The pearl agent ink used synthetic mica of the present invention was printed thereon with silk screen so as that thickness of the ink could be 100 µm. Then, silicone resin was printed thereon with silk screen so as that thickness of silicone resin could be 100 µm, thereby obtaining a transmissive screen (referred to as Invention 2 in the following). In here, an application quantity of the pearl agent per unit area was approximately 20mg/cm².

### Example 2-2

A transmissive screen (referred to as Invention 3 in the following) was manufactured by combining a conventional transmissive screen composed of Fresnel lens and lenticular lens with the present invention's product manufactured in the similar manner to Example 2-1 in order that the present invention's product could be located on the surface top. Then, properties of the transmissive screen in accordance with the present invention were experimented.

### Manufacturing of Comparative Example 2-1

A screen (referred to as Comparative Example 1' in the following) produced according to the same procedure with Example 2-1 of the present invention, was manufactured except for using natural mica in the place of the pearl agent of the present invention. Comparative experiment was performed between the properties of Comparative Example 1' and the transmissive screen of the present invention.

### Manufacturing of Comparative Example 2-2

A screen (referred to as Comparative Example 2' in the following) produced according to the same procedure with Example 1 of the present invention, was manufactured except for using aluminum powder in the place of the pearl agent of the present invention. Comparative experiment was performed between the properties of Comparative Example 2' and the transmissive screen of the present invention.

### Manufacturing of Comparative Example 2-3

By using a conventional transmissive screen (referred to as Comparative Example 3' in the following) that was composed of Fresnel lens and lenticular lens, comparative experiment was performed between the properties of Comparative Example 3' and the transmissive screen of the present invention.

As the comparative experiment for the properties of the screen, the present inventors investigated and judged with respect to four values: i.e., luminance of the image in front of the screen with respect to the equivalent incident illumination for the screen (referred to as luminance in the following); the value of angle that the reflected luminance in front of the screen becomes half value (referred to as half-value angle in the following); reproducibility to the color of the image to be projected (referred to as reproducibility in the following); and visibility of the image (referred to as visibility in the following).

In evaluating the properties of the screen, luminance and half-value angle were expressed numerically according to the actual measurement. These values indicted an excellent property, as these values were getting large. In reproducibility, the color of the image projected on the screen and the color in the actual film were compared. Reproducibility was evaluated with classification into five grades, i.e., Very Good ⓞ; Good ○; Average △; Bad X; and Too Bad X X. Also, in visibility, 10 persons which were selected randomly observed the images of the respective screens whose name were hidden in order to avoid subjective evaluation and evaluated visibility thereof with classification into five grades, i.e., Very Good 5; Good 4; Average 3; Bad 2; and Too Bad 1. Visibility of the image were represented with five grades by getting the average thereof, i.e., the grades of 4.5 to 5, 3.5 to 4.4, 2.5 to 3.4, 1.5 to 2.4 and 1 to 1.4 represented with Very Good ⓞ, Good ○, Average △, Bad X, Too Bad X X, respectively.

### Experimental Result

**TABLE 5**

| Comparing Items | Luminance | Half-Value Angle | Reproducibility | Visibility |
|---|---|---|---|---|
| Invention 2 | 100 | ±35° | ⓞ | ⓞ |
| Invention 3 | 90 | ±35° | ⓞ | ⓞ |
| Comp. Ex. 1' | 80 | ±30° | X | ○ |
| Comp. Ex. 2' | 30 | ±15° | ○ | X |
| Comp. Ex. 3' | 90 | ±30° | ○ | ○ |

From the results shown in TABLE 5, Comparative Example 1' had a problem in reproducibility, while it represented favorable results to a certain degree in respect of luminance, half-value angle and visibility. Though Comparative Example 2' represented favorable result to a certain degree in respect of reproducibility, nevertheless it could not obtain satisfactory results with respect to the other items. Accordingly, Comparative Example 2' was not available as a screen. Though Comparative Example 3' represented favorable results to a certain degree in respect of the whole items, nevertheless there still remained a little difficulty in visibility since a bar caused by lens was observed. On the contrary, the properties of Invention 2 that is the transmissive screen with the aid of the pearl agent used synthetic mica powder of the present invention represented favorable results in respect of the whole items to be experimented. Invention 3 also represented favorable results in the whole items.

Next, experiment of influence for three properties of the screen concerning luminance, half-value angle and reproducibility were performed by using the pearl agent that titanium dioxide having a settled layer thickness was coated and that used synthetic mica powders having distinct particle diameter. In this experiment, the layer thickness of titanium dioxide was uniformly determined on 40nm. As a result, the result in a manner as TABLE 6 was obtained. Representations of evaluation adopted the same methods as in TABLE 5, i.e., luminance, half-value angle and reproducibility.

**TABLE 6**

| Particle Diameter | 2 | 5 | 20 | 60 | 80 | 100 | 200 |
|---|---|---|---|---|---|---|---|
| Luminance | 70 | 70 | 80 | 100 | 110 | 100 | 100 |
| Half-Value Angle | ±20° | ±20° | ±25° | ±35° | ±35° | ±35° | ±35° |
| Reproducibility | △ | △ | ○ | ⓞ | ⓞ | ⓞ | ⓞ |

In TABLE 6, a unit of particle diameter was µm.

From the result of TABLE 6, it was appreciated that particle diameter of synthetic mica powder used in the present invention was preferably 60 µm to 200 µm.

Also, as mentioned in the reflective screen, the interference color that is indicated by titanium dioxide coated synthetic mica is different according to the layer thickness of titanium dioxide to be coated on the surface of synthetic mica powder. Then, experiments for the properties of the screen used titanium dioxide coated synthetic mica powder was performed with regard to distinct layer thickness of titanium dioxide, the results shown in TABLES 7 and 8 were obtained. In this experiment, particle diameter of synthetic mica was uniformly determined on 60 µm. Representations of evaluation were the same as represented in TABLE 6.

**TABLE 7**

| Layer Thickness | 5 | 10 | 20 | 30 | 40 |
|---|---|---|---|---|---|
| Luminance | 80 | 90 | 100 | 100 | 100 |
| Half-Value Angle | ±20° | ±20° | ±35° | ±35° | ±35° |
| Reproducibility | ○ | ○ | ⓞ | ⓞ | ⓞ |

**TABLE 8**

| Layer Thickness | 50 | 80 | 100 | 150 | 200 |
|---|---|---|---|---|---|
| Luminance | 100 | 90 | 85 | 85 | 85 |
| Half-Value Angle | ±30° | ±30° | ±30° | ±30° | ±30° |
| Reproducibility | ○ | △ | X | X | X |

In TABLES 7 and 8, a unit of layer thickness was nm.

From the results of TABLES 7 and 8, it was preferable that layer thickness of titanium dioxide to be coated on the surface of synthetic mica in the present invention was about 20nm to 40nm.

As mentioned thereinbefore, properties of the screen are highly improved by using synthetic mica in accordance with the present invention that is containing extremely lower amount of colorable metal and is favorable in chroma. In particular, the effect can be displayed exceedingly in the case where particle diameter is 60 µm to 200 µm and layer thickness is 20nm to 40nm.

As explained thereinbefore, according to the transmissive screen in accordance with the present invention, it is possible to provide a reflective screen and a projection type display unit that is improved luminance of image in the screen and a clear image can be observed at wide angle by using synthetic mica that is containing extremely lower amount of colorable metal and is favorable in chroma as mica and titanium dioxide coated mica to be used in pearl agent.

## Claims

1. A screen that indicates a projected image, wherein said screen is a screen containing synthetic mica that contains a titanium oxide coated mica and the mica is a synthetic mica.

2. A screen containing synthetic mica according to claim 1, wherein said screen is a reflective screen that a light reflecting surface and a light diffusion layer are forms on a base material.

3. A screen containing synthetic mica according to claim 1, wherein said screen is a transmissive screen that a light diffusion layer is formed on a base material.

4. A screen containing synthetic mica as in any of claims 1 to 3, wherein the synthetic mica in the titanium oxide coated synthetic mica to be contained is a synthetic fluorphlogophite shown by the Formula:
X_{1/3∼1}Y_{2∼3}(Z₄O₁₀)F₂
wherein X represents one or more ion selected from the group consisting of Na⁺, K⁺, Li⁺, Ca²⁺, Rb²⁺ and Sr²⁺; Y represents one or more ion selected from the group consisting of Mg²⁺, Fe²⁺, Ni²⁺, Mn²⁺, Al³⁺, Fe³⁺ and Li⁺; and Z represents one or more ion selected from the group consisting of Al³⁺, Si⁴⁺, Ge⁴⁺, Fe³⁺ and B³⁺.

5. A projection type reflective screen according to claim 2 or 4, wherein said synthetic mica that is used in the titanium oxide coated mica to be contained has a particle diameter of 5 to 200 µm.

6. A transmissive screen according to claim 3 or 4, wherein said synthetic mica that is used in the titanium oxide coated mica to be contained has a particle diameter of 60 to 200 µm.

7. A screen containing synthetic mica as in any of claims 1 to 6, wherein said titanium oxide coated mica to be contained is formed by coating the titanium oxide having layer thickness of 20 to 40nm on the synthetic mica.

8. A screen containing synthetic mica as in any of claims 1 to 7, wherein said titanium oxide coated synthetic mica is that a titanium dioxide and/or a low order titanium oxide is coated on the synthetic mica.

9. A screen containing synthetic mica as in any of claims 1 to 8, wherein said titanium oxide coated synthetic mica is used as a main ingredient that is composed of a pearl agent and said titanium oxide coated mica is contained in the screen by applying said pearl agent.
